Europäisches Patentamt

European Patent Office

Office européen des brevets

(19)

(11) Numéro de publication : **0 083 282**
**B1**

(12)

# FASCICULE DE BREVET EUROPÉEN

(45) Date de publication du fascicule du brevet :
28.05.86

(51) Int. Cl.⁴ : **G 01 B 5/20, G 01 B 5/00**

(21) Numéro de dépôt : 82402360.0

(22) Date de dépôt : 22.12.82

(54) **Dispositif de contrôle du profil d'une pièce.**

(30) Priorité : 28.12.81 FR 8124292

(43) Date de publication de la demande :
06.07.83 Bulletin 83/27

(45) Mention de la délivrance du brevet :
28.05.86 Bulletin 86/22

(84) Etats contractants désignés :
CH DE IT LI

(56) Documents cités :
DE-A- 2 011 346
LU-A-    55 735
US-A- 2 696 135

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Beaubron, Alain
2F. Avenue de l'Ouche
F-21000 Dijon (FR)**
Inventeur : **Forey, Denis
6, rue Marie Estivalet
F-21120 Is Sur Tille (FR)**

(74) Mandataire : **Mongrédien, André et al
c/o BREVATOME 25, rue de Ponthieu
F-75008 Paris (FR)**

## Description

La présente invention a pour objet un dispositif de contrôle du profil d'une pièce à l'aide d'un palpeur permettant notamment l'utilisation de palpeurs à faible course pour le contrôle de pièces de formes irrégulières.

Initialement, des machines spécifiques étaient créées pour chaque type de pièce. Cette solution était compliquée et coûteuse car les machines ne servaient en général que pour des séries limitées et devaient être abandonnées lorsqu'on cessait la fabrication du type de pièce correspondant. C'est pourquoi on s'est orienté vers des solutions modulaires permettant de réutiliser tout ou partie des éléments de la machine lorsque celle-ci a cessé d'être opérationnelle. Les premières machines de ce type réalisées comportaient deux plateaux orthogonaux, c'est-à-dire un premier plateau, généralement horizontal, sur lequel on fixait la pièce à contrôler, et un deuxième plateau perpendiculaire au premier sur lequel étaient fixés les bras porte-palpeurs. Chacun des deux plateaux était mobile en rotation, ce qui permettait le contrôle de pièces hémisphériques par exemple, suivant une exploration en méridiens ou en parallèles. Dans le cas de pièces de forme régulière, comme les pièces hémisphériques, on pouvait utiliser des palpeurs faible course. Cependant, pour des pièces de forme irrégulière, elliptiques par exemple, il s'est avéré nécessaire d'utiliser des palpeurs grande course, mais ceci entraînait certains inconvénients dus au fait que le plan tangent au point de contact de la bille du palpeur avec la pièce à contrôler n'est pas toujours orthogonal au déplacement du palpeur. Ceci amenait des flexions indésirables du palpeur et donc un manque de fidélité de l'appareil.

D'autres systèmes éliminent cet inconvénient en utilisant des palpeurs faible course montés sur une tête porte-palpeur dont on mesure les déplacements. Chaque palpeur est monté à l'extrémité d'un bras fixé à un chariot lui-même solidaire d'une plaque ou semelle mobile en rotation. Le suivi du profil théorique de la pièce à contrôler est assuré par les mouvements de rotation de la semelle complétés par un mouvement de translation du chariot par rapport à la semelle, cette translation étant commandée par un moteur pas à pas à asservissement électronique et mesurée par un troisième palpeur. Ce dernier peut être un palpeur longue course, puisqu'il est solidaire de la semelle et se déplace suivant la direction de translation du chariot : il reste donc constamment orthogonal à une plaque solidaire de ce chariot. Ce système présente encore quelques inconvénients. Tout d'abord, le suivi du profil théorique étant réalisé à l'aide d'un asservissement électronique, ceci complique le travail des contrôleurs qui ne sont pas toujours habitués à la manipulation d'appareillages électroniques complexes et le repérage du point de départ se fait également électroniquement. Enfin, des difficultés sont apparues pour assurer une bonne répétitivité de positionnement des bras escamotables porte-palpeurs.

Le document DE-A-2 011 346 décrit un dispositif de ce type, lequel comporte une semelle fixée à un support mobile en rotation. Un chariot est monté sur cette semelle et il est mobile par rapport à celle-ci grâce à un système vis-écrou. Un bloc fixé au chariot porte un premier palpeur et un levier pouvant pivoter par rapport à ce bloc porte un deuxième palpeur.

Le document US-A-2 696 135 décrit une machine-outil pour usiner des pièces à l'aide d'un outil de coupe. Celui-ci est monté sur un levier pouvant pivoter sur un support animé d'un mouvement de descente faisant un angle de 45° avec la verticale. Un bloc mobile en translation sur ce support comporte une rainure qui coopère avec une goupille fixée sur le levier : la combinaison des différents mouvements fait pivoter le levier et oriente l'outil de coupe.

La présente invention a pour but de remédier aux inconvénients mentionnés ci-dessus en facilitant le suivi du profil théorique de la pièce à contrôler ainsi que le positionnement des bras porte-palpeurs.

Le dispositif de contrôle du profil d'une pièce objet de l'invention comporte, de manière connue :

au moins un palpeur monté à une extrémité d'un bras porte-palpeur, et

des moyens de déplacement de ce bras afin que le palpeur puisse se déplacer en suivant le profil théorique de la pièce à contrôler, ces moyens de déplacement comprenant :

une semelle mobile en rotation grâce à un mécanisme d'entraînement, et

un chariot relié à la semelle et mobile en translation par rapport à celle-ci, le bras porte-palpeur étant solidaire du chariot grâce à des moyens de fixation.

Selon l'invention, ce dispositif est caractérisé en ce qu'il comporte en outre :

des moyens élastiques reliant le chariot à la semelle,

un gabarit ayant un profil sensiblement homothétique de celui de la pièce à contrôler, la position relative du gabarit et de la pièce restant invariable pendant toute la durée du contrôle, et

un galet solidaire du chariot mobile et apte à rouler sur le gabarit lorsque la semelle est entraînée en rotation.

Selon une autre caractéristique de ce dispositif, il comprend, à l'extrémité du bras porte-palpeur :

un tube-guide à l'intérieur duquel peut coulisser la tige du palpeur, le guidage étant assuré par un système à billes,

un tube cylindrique, parallèle au tube-guide et à l'intérieur duquel peut glisser la tige d'un capteur de déplacement,

une pièce de liaison rendant solidaires le palpeur et la tige du capteur de déplacement.

Suivant un mode de réalisation préféré, les moyens de fixation du porte-palpeur sur le chariot comprennent :

une pièce de liaison ayant une partie en forme de queue d'aronde apte à s'engager dans un profil correspondant ménagé dans le chariot,

une pièce de verrouillage, mobile autour d'un axe et dont une extrémité a une forme telle qu'elle puisse appliquer la queue d'aronde à l'intérieur du profil correspondant,

un ressort dont une extrémité est fixée au chariot et dont l'autre extrémité est solidaire de la pièce de verrouillage, et

une vis servant à régler la force exercée par le ressort sur la pièce de verrouillage.

L'invention apparaîtra mieux à la lecture de la description qui va suivre, donnée à titre d'exemple purement illustratif et nullement limitatif, en référence aux dessins annexés, dans lesquels :

la figure 1 est une vue schématique en élévation du dispositif de contrôle objet de l'invention ;

la figure 2 est une vue agrandie en coupe partielle suivant la ligne II-II de la figure 1 ;

la figure 3 est une vue schématique en coupe suivant la ligne III-III de la figure 1 ;

la figure 4 est une vue schématique en coupe d'un palpeur monté à une extrémité d'un bras porte-palpeurs ; et

la figure 5 est une vue schématique en élévation illustrant l'application de l'invention au contrôle d'une pièce profilée telle qu'une came.

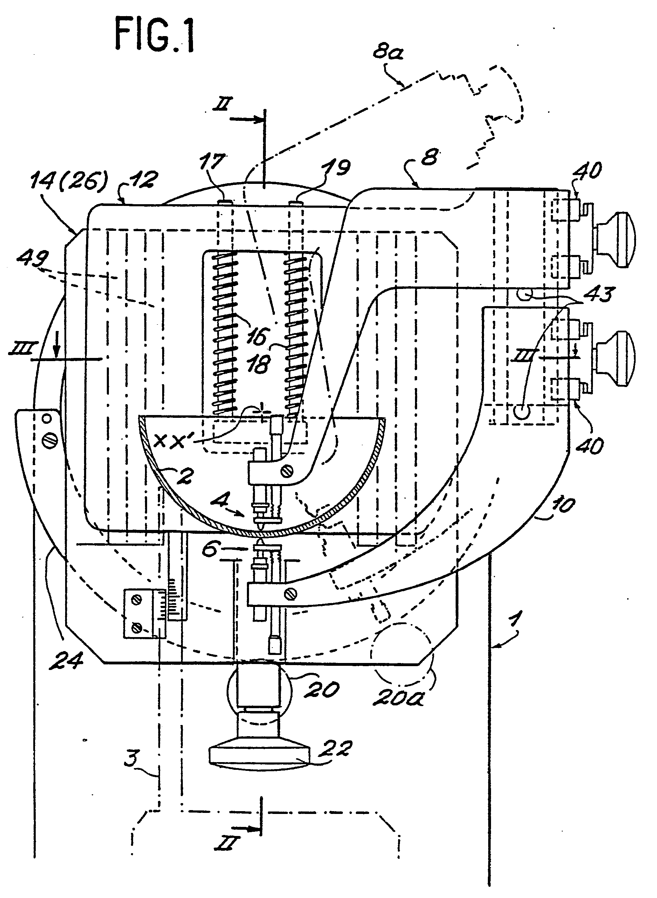

Sur la figure 1, on voit la machine de contrôle, portant la référence générale 1, sur laquelle est fixée la pièce à contrôler 2 qui, dans l'exemple décrit ici, a la forme d'une demi-sphère creuse. Le suivi de profil est assuré à l'aide de deux palpeurs, l'un intérieur 4 et l'autre extérieur 6, montés à l'extrémité de deux bras porte-palpeurs 8 et 10 respectivement. Ceux-ci sont fixés sur un chariot 12 relié à une semelle 14 par des ressorts de rappel 16 et 18 montés sur des tiges 17 et 19. La semelle 14 est mobile en rotation autour d'un axe XX' perpendiculaire au plan de figure. Dans la partie inférieure de la figure, on voit encore un galet 20, solidaire du chariot 12, et dont la position relative par rapport à celui-ci est réglable à l'aide d'une vis 22. Le galet 20 peut rouler sur un gabarit 24 dont le profil est homothétique à celui de la pièce à contrôler 2. Dans l'exemple décrit ici, la pièce à contrôler 2 étant une demi-sphère, le gabarit 24 a la forme d'un demi-cercle de rayon supérieur à celui de la pièce 2 et constitue une sorte de rail sur lequel peut rouler le galet 20. Le montage est tel que les centres de la pièce 2 et du cercle défini par le gabarit 24 se trouvent l'un et l'autre au voisinage de l'axe XX'.

Lorsque la semelle 14 est entraînée en rotation, l'ensemble constitué par la semelle 14, le chariot 12 et les bras porte-palpeurs 8 et 10 est lui-même entraîné en rotation, et le bras 8 vient en une position 8a, représentée en traits mixtes sur la figure, tandis que le galet 20 vient en une position 20a également représentée en traits mixtes. Les ressorts de rappel 16 et 18 qui assurent la liaison entre la semelle 14 et le chariot 12 permettent de maintenir le galet 20 constamment appliqué sur le gabarit 24. Si la pièce 2 n'était pas de forme hémisphérique, mais par exemple de forme elliptique, il est bien évident qu'au cours de la rotation, la distance entre les points de contact des palpeurs 4 et 6 et l'axe de rotation de la semelle 14 doit varier. Ceci est réalisé en donnant au gabarit 24 une forme différente mais toujours sensiblement homothétique à celle de la pièce à contrôler. En effet, le galet 20 étant solidaire du chariot mobile 12, celui-ci peut se déplacer par rapport à la semelle 14 grâce aux ressorts de rappel 16 et 18 si le profil du gabarit entraîne une variation de la distance entre le galet 20 et l'axe de rotation de la semelle 14. On peut ainsi assurer le suivi de profil d'une pièce de forme irrégulière à l'aide de palpeurs à faible course, ce qui améliore la fiabilité de l'appareil.

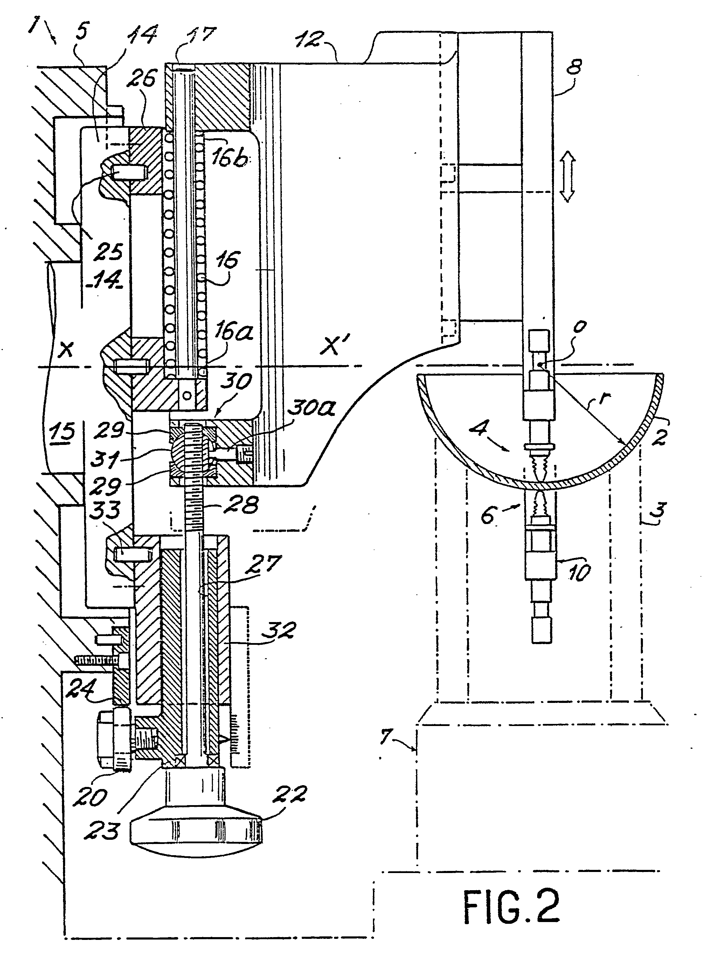

La figure 2 montre plus en détail comment le chariot mobile 12 est relié à la semelle 14. Sur cette figure, on retrouve la pièce à contrôler 2 fixée sur un support 3 lui-même monté sur un plateau tournant 7. La pièce 2 étant une demi-sphère de centre O et de rayon intérieur r, elle est disposée au départ de telle sorte que son axe de symétrie soit vertical et que son centre O se trouve sur l'axe de rotation XX' de la semelle 14 ou au voisinage de cet axe. Les palpeurs 4 et 6 vont donc être animés d'un mouvement de rotation dans un plan perpendiculaire à celui de la figure 2 et le contrôle de profil se fait suivant l'un des méridiens de la pièce 2. Le plateau tournant 7 permet de modifier la position de cette dernière et d'effectuer plusieurs contrôles suivant plusieurs méridiens différents. On voit également sur la figure le bras porte-palpeurs 8 solidaire du chariot mobile 12 et la semelle 14 qui est entraînée en rotation par un arbre 15 lié au bâti 5 de la machine de contrôle 1. La semelle 14 est reliée par des pions 25 à un support 26 sur lequel est monté la tige 17. Le ressort 16 enroulé autour de la tige 17 a une de ses extrémités 16a fixée au support 26 et l'autre extrémité 16b fixée au chariot 12.

Dans la partie inférieure de la figure, on voit le gabarit 24, fixé au bâti 5 de la machine 1, et sur lequel roule le galet 20. Ce dernier est fixé à un support 23 présentant un passage 27 dans lequel est engagée la vis 22. Cette dernière est immobilisée en translation par rapport au support 23, mais libre en rotation. Elle présente à son extrémité supérieure une partie filetée 28 qui coopère avec une noix d'entraînement 30 montée à l'extrémité inférieure du chariot mobile 12. Cette noix d'entraînement se compose de plusieurs flasques 29 fixés sur le chariot 12 et définissant un logement sphérique à l'intérieur duquel se trouve un écrou sphérique 31. Celui-ci comporte en son centre une partie taraudée dans laquelle s'engage la partie filetée 28 de la vis 22. L'écrou 31 présente également un méplat sur lequel s'appuie une vis de blocage 30a. On empêche ainsi une rotation de l'écrou 31 autour de l'axe de la vis 22, mais il peut tourner légèrement autour d'un axe passant par son centre et perpendiculaire au plan de la figure : on évite ainsi les inconvénients d'un éventuel désaxage entre le support 23 et le chariot 12. Lorsque la semelle 14 est entraînée en rotation par l'arbre 15, le galet 20 roule sur le gabarit 24 en étant appliqué contre celui-ci grâce aux ressorts de rappel 16 et 18 qui assurent la liaison entre le chariot 12 et la semelle 14. Si la pièce à contrôler est de forme irrégulière, la forme du gabarit 24 peut obliger le galet 20 à s'éloigner ou à se rapprocher de l'axe de rotation XX' de la semelle 14. Dans ce cas, le chariot mobile 12 peut monter ou descendre par rapport à la semelle 14 grâce à la détente ou à la compression du ressort 16. La précision du mouvement relatif entre le chariot 12 et la semelle 14 est assurée grâce au fait que le support 23 peut glisser à l'intérieur d'un support 32 lui-même fixé sur la semelle 14 par un pion de fixation 33.

Il est bien évident que lorsqu'on change de type de pièce, il peut être nécessaire de changer le gabarit 24. Dans ce cas, la position des palpeurs 4 et 6 au début du contrôle étant déterminée par le positionnement de la pièce 2 sur le support 3, la distance entre le galet 20 et l'axe XX' doit être en général modifiée. Ceci est obtenu en manœuvrant la vis 22, ce qui permet d'éloigner plus ou moins le support 23 du chariot mobile 12. Le suivi de profil est assuré à l'aide de deux systèmes de détection, le premier servant à mesurer les mouvements du chariot 12 par rapport au bâti de la machine et le deuxième servant à mesurer les déplacements relatifs des palpeurs 4 et 6 par rapport au chariot 12.

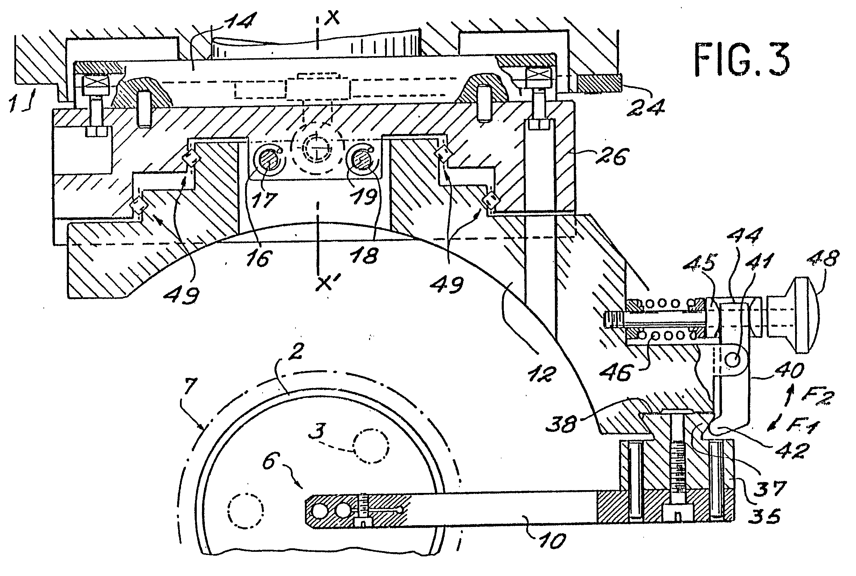

Afin de faciliter l'étalonnage du poste et d'augmenter la stabilité de l'appareil, il est prévu un système particulier de fixation des bras porte-palpeurs 8 et 10 sur le chariot 12. Ce dispositif apparaît sur la vue de dessus de la figure 3.

Sur cette figure, on voit le bras inférieur 10, le chariot mobile 12, la semelle 14 ainsi que les ressorts de rappel 16 et 18 entourant les tiges 17 et 19 respectivement. On voit que le bras 10 est solidaire d'une pièce de liaison 35 présentant une partie en forme de queue d'aronde 37 qui peut s'encastrer dans un logement correspondant 38 du chariot 12. La fixation est assurée à l'aide d'une pièce de verrouillage 40, mobile autour d'un axe 41 fixe par rapport au chariot 12, et dont une première extrémité 42 a une forme telle qu'elle puisse appliquer la queue d'aronde 37 à l'intérieur du logement 38. L'autre extrémité 44 de la pièce 40 est encastrée dans un support 45 lui-même fixé à une extrémité d'un ressort taré 46, tandis que l'autre extrémité de ce ressort est fixée au chariot 12. Une vis 48 traversant le ressort 46 et le support 45 permet de déplacer celui-ci et donc de comprimer plus ou moins le ressort 46.

Le fonctionnement du dispositif de verrouillage est le suivant : lorsqu'on dévisse la vis 48, le ressort 46 pousse le support 45 vers la droite de la figure. La pièce 40 est donc entraînée en rotation dans le sens de la flèche $F_1$ et son extrémité 42 applique la queue d'aronde 37 dans le logement 38. Le ressort 46 étant taré, la force qu'il exerce sur la pièce 40 atteint un maximum et reste constamment à cette valeur, même si l'on dévisse davantage ou retire la vis 48. Pour le démontage du bras support 10, il suffit de revisser la vis 48 pour déplacer le support 45 vers la gauche et obtenir la rotation de la pièce 40 dans le sens de la flèche $F_2$. La pièce 35 étant appliquée avec une certaine force sur les deux faces du logement 38, on obtient toujours le même positionnement latéral du bras 10 par rapport au chariot 12 quel que soit l'opérateur qui effectue le démontage et le remontage. Le positionnement en hauteur est également constant grâce à deux butées 43 (visibles sur la figure 1) qui empêchent la descente des bras 8 et 10 le long du chariot 12. Il est donc aisé de placer les bras supports exactement dans la même position après chaque démontage, ce qui facilite la détermination de la position de départ pour chaque nouveau contrôle. On voit encore sur la figure 3 quatre rails 49 qui assurent le guidage du chariot 12 par rapport au support 26 de la semelle 14, évitant ainsi les erreurs dues à un désaxage éventuel entre le chariot 12 et la semelle 14.

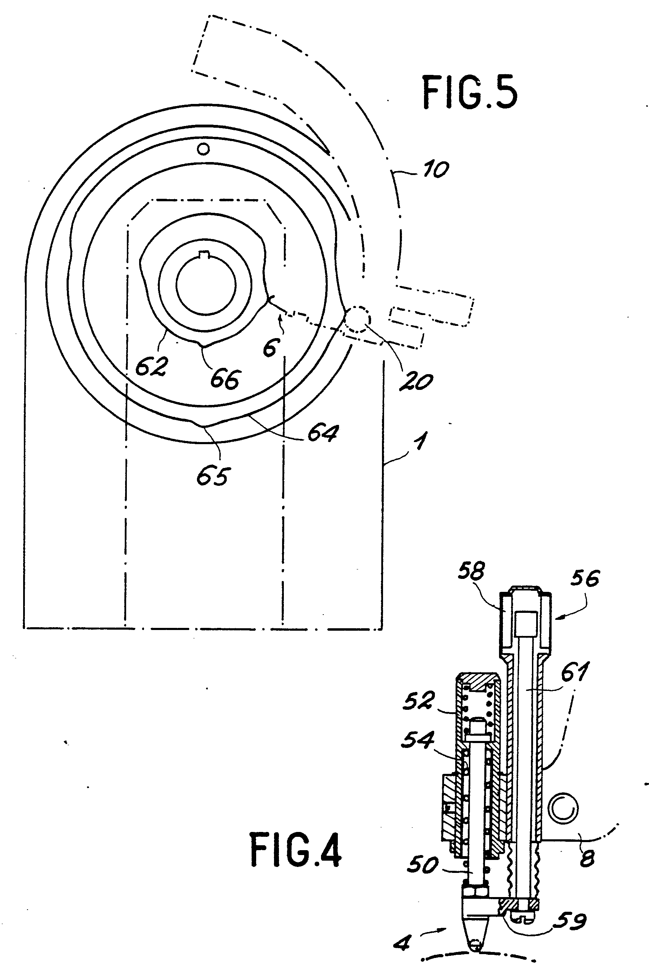

La figure 4 illustre le montage du palpeur intérieur 4 à l'extrémité du bras support 8. On voit que la tige 50 du palpeur 4, qui est un palpeur à faible course, est mobile en translation à l'intérieur d'un tube-guide 52, le guidage étant assuré par un système à billes 54. Parallèlement au tube 52 est disposé un logement cylindrique 56 contenant un capteur de déplacement 58. Une pièce de liaison 59 rend le palpeur 4 solidaire de la tige 61 du capteur de déplacement 58. Ainsi, les déplacements du palpeur 4 sont traduits par des déplacements identiques de la tige 61 du capteur 58 : ce dernier est relié à un système de mesure (non représenté). Grâce à cette disposition, le palpeur est bien guidé et le capteur de déplacement ne subit pas les effets parasites et les causes d'erreur que pourrait entraîner une légère flexion du palpeur au cas où celui-ci ne serait pas perpendiculaire au plan tangent à la surface de la pièce à contrôler.

Le déroulement d'une opération de contrôle se fait de la manière suivante : on installe d'abord la pièce à contrôler dans une position bien déterminée sur son support 3, les palpeurs 4 et 6 étant en contact avec les parois intérieure et extérieure de la pièce 2 respectivement, s'il s'agit d'une pièce creuse. Ensuite, on place le gabarit 24 correspondant au type de pièce à contrôler et on règle la distance entre le support 23 et le chariot 12 à l'aide de la vis 22 pour que le galet 20 soit appliqué sur le gabarit 24. Un étalonnage préalable, à l'aide de cales étalons par exemple, a permis de connaître la position exacte des palpeurs et de la pièce 2 par rapport au bâti de la machine. La semelle 14 est ensuite mise en rotation et les bras porte-palpeurs suivent le profil théorique de la pièce puisque le chariot 12 peut se déplacer par rapport à la semelle 14 grâce aux ressorts 16 et 18 et au galet 20 qui roule sur le gabarit 24. Deux systèmes de mesure (non représentés) permettent de mesurer d'une part les déplacements du chariot 12 par rapport au bâti de la machine et d'autre part les déplacements des palpeurs par rapport au chariot 12 : il est donc facile d'obtenir le profil réel de la pièce à contrôler.

Ainsi, le dispositif selon l'invention présente des avantages particulièrement intéressants, puisqu'il permet de contrôler le profil de pièces de forme irrégulière avec des palpeurs faible course. Il faut remarquer que le gabarit 24 n'a pas besoin d'être usiné avec une aussi grande précision que la pièce à contrôler : en effet, ce n'est pas un modèle, mais simplement un dispositif de guidage du galet 20, et donc du chariot 12. Il n'est pas nécessaire non plus que le profil du gabarit 24 soit rigoureusement homothétique du profil de la pièce à contrôler : au contraire, un même gabarit peut être utilisé pour différents types de pièces à condition toutefois que leurs rayons de courbure restent voisins les uns des autres. En effet, puisqu'on peut mesurer d'une part les déplacements du chariot 12 par rapport au bâti de la machine, et d'autre part par les déplacements des palpeurs 4 et 6 par rapport au chariot 12 lui-même, il suffit de déterminer de manière précise un point de départ pour l'étalonnage, et de faire les mesures à partir de ce point de départ.

La construction de l'appareil concourt bien au but recherché, qui est de pouvoir contrôler facilement des profils irréguliers avec une très grande fiabilité notamment en utilisant des palpeurs faible course. Ceci est obtenu grâce à l'utilisation d'un gabarit pour suivre le profil théorique de la pièce, grâce à un guidage précis du chariot 12 par rapport à la semelle 14, assuré par les rails 49 d'une part et les ressorts de rappel 16 et 18 d'autre part, par le dispositif de fixation des bras porte-palpeurs sur le chariot 12 qui permet d'obtenir toujours le même positionnement des bras sur le chariot, et par le montage du palpeur tel que représenté à la figure 4.

Quant aux applications de ce dispositif, elles couvrent le contrôle de toute pièce présentant un profil devant être usiné avec précision.

La figure 5 illustre une application de ce dispositif au contrôle d'une came 62. On voit sur la figure le palpeur extérieur 6 monté sur le bras support 10 qui suit le profil de la came 62, tandis que le galet 20 roule sur un gabarit 64 présentant des bosses 65 correspondant aux bosses 66 de la came 62.

## Revendications

1. Dispositif de contrôle du profil d'une pièce (2) comportant :

au moins un palpeur (4) monté à une extrémité d'un bras porte-palpeur (8), et

des moyens de déplacement de ce bras afin que le palpeur (4) puisse se déplacer en suivant le profil théorique de la pièce à contrôler (2), ces moyens de déplacement comprenant :

une semelle (14) mobile en rotation grâce à un mécanisme d'entraînement, et

un chariot (12) relié à la semelle (14) et mobile en translation par rapport à celle-ci, le bras porte-palpeur (8) étant solidaire du chariot (12) grâce à des moyens de fixation (37, 40),
caractérisé en ce qu'il comporte en outre :

des moyens élastiques (16, 18) reliant le chariot (12) à la semelle (14),

un gabarit (24) ayant un profil sensiblement homothétique de celui de la pièce à contrôler, la position relative du gabarit (24) et de la pièce (2) restant invariable pendant toute la durée du contrôle, et

un galet (20) solidaire du chariot mobile (12) et apte à rouler sur le gabarit (24) lorsque la semelle (14) est entraînée en rotation.

2. Dispositif selon la revendication 1, caractérisé en ce qu'il comprend, à l'extrémité du bras porte-palpeur (8) :

un tube-guide (52) à l'intérieur duquel peut coulisser la tige (50) du palpeur (4), le guidage étant assuré par un système à billes (54),

un tube cylindrique (56) parallèle au tube-guide (52) et à l'intérieur duquel peut glisser la tige (61) d'un capteur de déplacement (58), et

une pièce de liaison (59) rendant solidaires le palpeur (4) et la tige (61) du capteur de déplacement (58).

3. Dispositif selon l'une quelconque des revendications 1 et 2, caractérisé en ce que les moyens de fixation du bras porte-palpeur (10) sur le chariot (12) comprennent :

une pièce de liaison (35) ayant une partie en forme de queue d'aronde (37) apte à s'engager dans un profil correspondant (38) ménagé dans le chariot (12),

une pièce de verrouillage (40), mobile autour d'un axe (41) et dont une extrémité (42) a une forme telle qu'elle puisse appliquer la queue d'aronde (37) à l'intérieur du profil correspondant (38),

un ressort (46) dont une extrémité est fixée au chariot (12) et dont l'autre extrémité est solidaire de la pièce de verrouillage (40), et

une vis (48) servant à régler la force exercée par le ressort (46) sur la pièce de verrouillage (40).

4. Dispositif selon l'une quelconque des revendications 1 à 3, caractérisé en ce qu'il comprend des moyens permettant de régler la position du galet (20) par rapport au chariot (12).

5. Dispositif selon la revendication 4, caractérisé en ce que lesdits moyens permettant de régler la position du galet (20) par rapport au chariot (12) comprennent :

un support (23) dont le galet (20) est solidaire,

une vis (22) immobilisée en translation, mais libre en rotation, par rapport au support (23), et

une noix d'entraînement (30) comprenant des flasques (29) définissant un logement sphérique dans lequel est placé un écrou sphérique (31) percé d'un filetage dans lequel vient s'engager l'extrémité de la partie filetée de la vis (22).

## Claims

1. Apparatus for controlling the profile of a workpiece (2) comprising :

at least one feeler (4) mounted at an end of a feeler arm (8) and

displacement means for said arm whereby the feeler (4) is displaceable to follow the theoretical profile of a workpiece to be controlled (2), said displacement means comprising :

a sole member (14) rotatable by a transmission means, and

a chariot (12) connected to the sole member (14) and translatable with respect thereto, the feeler arm (8) being fixed to the chariot (12) by fixing means (37, 40),

characterized in that it additionally comprises :

elastic means (16, 18) connecting the chariot (12) to the sole member (14),

a template (24) having a profile substantially corresponding to that of the workpiece to be controlled, the relative position of the template (24) and the workpiece (2) being fixed during the entire control process, and

a roller (20) fixed with respect to the movable chariot (12) and adapted to roll over the template (24) when the sole member (14) is rotated.

2. Apparatus according to Claim 1, characterised in that it comprises at the end of the feeler arm (8) :

a guide tube (52) in whose interior the rod (50) of the feeler (4) is slidable, guided by a ball-bearing system (54),

a cylindrical tube (56) parallel to the guide tube (52) and within whose interior slides the rod (61) of a displacement sensor (58) and

a connecting member (59) fixing the feeler (4) with respect to the rod (61) of the displacement sensor (58).

3. Apparatus according to either of claims 1 and 2, characterised in that the means for fixing the feeler arm (10) on the chariot (12) comprise :

a connecting member (35) having a part in the form of a swallow tail (37) adapted to engage a corresponding recess (38) formed in the chariot (12),

a pawl (40) movable around an axis (41) and having an end (42) of a form such that it can urge the swallow tail (37) into the interior of the corresponding recess (38),

a spring (46) one end of which is fixed to the chariot (12) and whose other end is fixed to the pawl (40), and

a screw (48) acting to regulate the force exerted by the spring (46) on the pawl (40).

4. Apparatus according to any one of claims 1 to 3, characterised in that it comprises means for regulating the position of the roller (20) with respect to the chariot (12).

5. Apparatus according to claim 4, characterised in that the means for regulating the position of the roller (20) with respect to the chariot (12) comprise :

a support (23) fixed with respect to the roller (20),

a screw (22) fixed in translation but rotatable with respect to the support (23), and

a transmission yoke (30) comprising chocks (29) defining a spherical housing containing a spherical nut (31) having a threaded bore for engaging the threaded end of the screw (22).

## Patentansprüche

1. Kontrollvorrichtung für das Profil eines Werkstücks (2), enthaltend :

wenigstens einen Taster (4), der am einen Ende eines Tasterhaltearms (8) befestigt ist, und

Verstelleinrichtungen für diesen Arm, damit der Taster (4) sich beim Verfolgen des theoretischen Profils des zu kontrollierenden Werkstücks (2) verstellen kann, wobei diese Verstelleinrichtungen enthalten :

eine aufgrund eines Antriebsmechanismus drehbewegliche Tragplatte (14), und

einen mit der Tragplatte (14) verbundenen Schlitten (12), der in bezug auf diese längsbeweglich ist, wobei der Tasterhaltearm (8) fest mit dem Schlitten (12) aufgrund von Befestigungseinrichtungen (37, 40) verbunden ist,

dadurch gekennzeichnet, daß sie weiterhin enthält :

elastische Einrichtungen (16, 18), die den Schlitten (12) mit der Tragplatte (14) verbinden,

ein Bezugsformstück (24), das ein Profil aufweist, das im wesentlichen homothetisch zu jenem des zu kontrollierenden Werkstücks ist, wobei die relative Lage des Bezugsformstücks (24) und des Werkstücks (2) während der gesamten Kontrolldauer unverändert bleibt, und

eine mit dem beweglichen Schlitten (12) fest verbundene Rolle (20), die dazu eingerichtet ist, auf dem Bezugsformstück (24) abzurollen, wenn die Tragplatte (14) in Rotation versetzt ist.

2. Vorrichtung nach Anspruch 1, dadurch gekennzeichnet, daß sie am Ende des Tasterhaltearms (8) enthält :

ein Führungsrohr (52), in dessen Inneren der Stab (50) des Tasters (4) gleiten kann, wobei die Führung durch ein System von Kügelchen sichergestellt ist,

ein zu dem Führungsrohr (52) paralleles zylindrisches Rohr (56), in dessen Inneren der Stab (61) eines Verstellungsaufnehmers (58) gleiten kann, und

ein Verbindungsstück (59), das den Taster (4) und den Stab des Verstellungsaufnehmers (58) fest miteinander verbindet.

3. Vorrichtung nach einem der Ansprüche 1 und 2, dadurch gekennzeichnet, daß die Befestigungseinrichtungen des Tasterhaltearms (8) an dem Schlitten (12) enthalten :

ein Verbindungsstück (35), das einen Abschnitt in Form eines Schwalbenschwanzes (37) aufweist, der dazu geeignet ist, in ein entsprechendes Profil (38) einzugreifen, das in dem Schlitten (12) ausgebildet ist,

ein Verriegelungsstück (40), das um eine Achse (41) beweglich ist und dessen eines Ende eine solche Form aufweist, daß es sich an den Schwalbenschwanz (37) im Innern des zugehörigen Profils (38) anlegen kann,

eine Feder (46), deren eines Ende an dem Schlitten (12) befestigt ist, und deren anderes Ende fest mit dem Verriegelungsstück (40) verbunden ist, und

eine Schraube (48), die dazu dient, die Kraft einzustellen, die von der Feder (46) auf das Verriegelungsstück (40) ausgeübt wird.

4. Vorrichtung nach einem der Ansprüche 1 bis 3, dadurch gekennzeichnet, daß sie Einrichtungen enthält, die es gestatten, die Position der Rolle (20) gegenüber dem Schlitten (12) zu verstellen.

5. Vorrichtung nach Anspruch 4, dadurch gekennzeichnet, daß die Einrichtungen, die die Verstellung der Position der Rolle (20) gegenüber dem Schlitten (12) gestatten, enthalten :

einen Träger (23), an dem die Rolle (20) angebracht ist,

eine Schraube (22), die gegenüber dem Träger (23) in Längsrichtung festgelegt ist, jedoch frei drehen kann, und

eine Antriebsnuß (30) mit Flanschen (29), die eine sphärische Aufnahme ausbilden, in der eine sphärische Mutter (31) angeordnet ist, die von einem Gewinde durchdrungen ist, in welches das Ende des Gewindeabschnitts der Schraube (22) in Eingriff gelangt.

# FIG.1

1

FIG.2

FIG.3

FIG.5

10

62    66    6    20

64

65

1

58    56

52    61

54

50    8

FIG.4

4    59